# EUROPÄISCHE PATENTSCHRIFT

(11) **EP 0 433 664 B1**
(45) Veröffentlichungstag und Bekanntmachung des Hinweises auf die Patenterteilung: **25.05.1994**
(21) Anmeldenummer: 90121922.0
(22) Anmeldetag: 16.11.1990
(51) Int. Cl.: B01D 36/00, B01D 27/08

(54) **Flüssigkeitsfilter**
Liquid filter
Filtre pour liquides

(30) Priorität: 20.12.1989 DE 3941996
(43) Veröffentlichungstag der Anmeldung: 26.06.1991
(73) Patentinhaber: ROBERT BOSCH GMBH, 70442 Stuttgart (DE)
(72) Erfinder: Bosch, Franz-Ulrich, Dipl.-Ing. (FH), W-7000 Stuttgart 75 (DE); Müller, Willi, W-7247 Sulz-Sigmarswangen (DE); Eblen, Ewald, Dr. Ing., W-7000 Stuttgart 75 (DE)

(56) Entgegenhaltungen:
- EP-A- 0 289 188
- WO-A-86/00241
- US-A- 3 237 769

## Beschreibung

### Stand der Technik

Die Erfindung geht aus von einem Flüssigkeitsfilter nach der Gattung des Hauptanspruchs.

Es ist schon ein Flüssigkeitsfilter aus der EP-A-260 069 bekannt, bei dem in einem Gehäuse ein Filterelement zwischen einen im Deckel angeordneten Zulauf und einen Ablauf geschaltet ist. Im Gehäuse ist unterhalb des Filterelements ein Wasserspeicherraum ausgebildet, der über eine Wasser-Ablaßschraube entleerbar ist. Das Filterelement weist an seiner unteren, dem Wasserspeicherraum zugewandten Stirnseite eine Abdeckkappe auf, welche Schmutz- und Reinseite voneinander trennt. Von Nachteil hierbei ist, daß der Wasserspeicherraum von einem gesonderten, topfförmigen Gehäuseteil gebildet wird, das einerseits an einem hülsenförmigen Gehäuseteil angeschraubt ist und an dem das Filterelement mit Hilfe der Abdeckkappe festgeschraubt ist. Die Ablaßschraube selbst ist an diesem topfförmigen Gehäuseteil befestigt. Die Bauweise dieses Flüssigkeitsfilters ist deswegen besonders aufwendig, weil im Bereich des Wasserspeicherraums zur Abdichtung des Gehäuseinneren nach außen hin und zur Abdichtung zwischen Schmutz- und Reinseite zwei gesonderte Abdichtungen erforderlich sind, die zudem im Gewindebereich liegen. Obwohl sich dieses Flüssigkeitsfilter für Wickeleinsätze und Sterneinsätze eignet, ist seine Bauart doch aufwendig und kostspielig.

Gemäß einem älteren Vorschlag nach der nachveröffentlichten EP-A-0 385 113 ist ein Flüssigkeitsfilter bekannt, das in seinem Gehäuse ein Wickelelement aufnimmt, dessen untere Stirnseite von einer becherförmigen Abdeckkappe abgeschlossen ist. Diese Abdeckkappe ist dicht und fest mit dem Außenumfang des Wickelelements verbunden, stellt eine Druckmittelverbindung zwischen der unteren Stirnseite des Wickels und der Öffnung des Mittelrohres her und bildet zudem einen Wasserspeicherraum, der über eine Ablaßschraube entleerbar ist. Bei dieser Bauweise sitzt die Ablaßschraube bereits in einem Gewindestutzen dieser Abdeckkappe; jedoch ist es noch ungünstig, daß einerseits für die Dichtung zwischen Abdeckkappe und Gehäuse ein O-Ring vorgesehen ist, der für die innere Abdichtung zwischen Schmutz- und Reinseite sorgt, während für die äußere Abdichtung nach außen hin ein zusätzlicher Dichtring in der Ablaßschraube erforderlich ist. Dies erfordert einen erhöhten Aufwand für zwei Dichtstellen, der sich insbesondere beim Austausch des Filtereinsatzes ungünstig bemerkbar macht.

Aus der EP-A-0 289 188 ist ferner ein Flüssigkeitsfilter bekannt, dessen Gehäuse zweiteilig ausgebildet ist und in einem hülsenförmigen, unten offenen Gehäuseteil einen Sterneinsatz aufnimmt. Unten am hülsenförmigen Gehäuseteil ist ein becherfömiges Bodenteil festgeschraubt, das innen einen Wasserspeicherraum bildet, der über ein Ablaßventil entleerbar ist. Für die Abdichtungen des Wasserspeicherraums nach außen sind sowohl am Ablaßventil als auch am Bodenteil jeweils gesonderte Dichtungen vorgesehen; eine am Filtereinsatz befestigte Abdeckkappe liegt nicht vor.

### Vorteile der Erfindung

Das erfindungsgemäße Flüssigkeitsfilter mit den kennzeichnenden Merkmalen des Hauptanspruchs hat demgegenüber den Vorteil, daß es bei einfacher Bauweise eine kostengünstige und sichere Abdichtung ermöglicht, indem alle Dichtfunktionen an dieser Stelle von einem einzigen Dichtelement übernommen werden. Dabei ist dieses Dichtelement leicht zugänglich und somit gut austauschbar. Die Montage bei einem austauschbaren Filterelement gestaltet sich daher einfach. Auch ergeben sich hierbei keine Schmutzprobleme beim Filterwechsel. Darüber hinaus eignet sich diese Bauart sowohl für einen Wickeleinsatz als auch für einen Sterneinsatz. Zudem wird hierbei ein in axialer Richtung verspannungsarmer Einbau des Filtereinsatzes im Gehäuse nicht beeinträchtigt.

Durch die in den Unteransprüchen aufgeführten Maßnahmen sind vorteilhafte Weiterbildungen und Verbesserungen des im Hauptanspruch angegebenen Flüssigkeitsfilters möglich. Durch die Ausbildung nach den Ansprüchen 2 bis 9 werden besonders kostengünstige, leicht handhabbare und einfache Ausführungsformen erreicht.

### Zeichnung

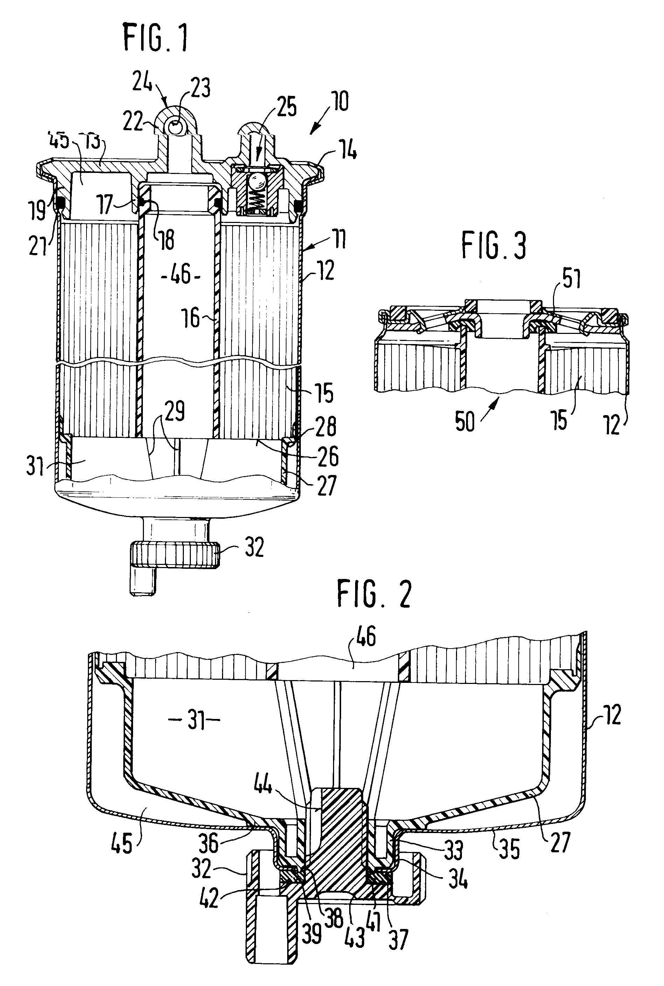

Zwei Ausführungsbeispiele der Erfindung sind in der Zeichnung dargestellt und in der nachfolgenden Beschreibung näher erläutert. Es zeigen Figur 1 einen Längsschnitt durch ein erfindungsgemäßes Flüssigkeitsfilter, Figur 2 einen Längsschnitt durch den unteren Teil des Flüssigkeitsfilters nach Figur 1 in vergrößertem Maßstab und Figur 3 einen Längsschnitt durch den oberen Teil eines zweiten Flüssigkeitsfilters.

### Beschreibung der Ausführungsbeispiele

Die Figur 1 zeigt einen Längsschnitt durch ein Flüssigkeitsfilter 10 für Dieselkraftstoff, das in nicht näher gezeichneter Weise als Leitungsfilter zum Anschließen von Schlauchleitungen ausgebildet ist. Es hat ein Gehäuse 11, das aus einem becherförmigen, metallischen Gehäuseteil 12 und einem Deckel 13 besteht, die durch eine Befestigungseinrichtung 14, die hier als Spannband mit nicht näher gezeichnetem Schnellverschluß ausgebildet ist, lösbar miteinander verbunden sind.

Das becherförmige Gehäuseteil 12 nimmt in seinem Inneren als Filterelement ein axial durchströmtes Wickelelement 15 auf, dessen Filterpapier spiralig um ein Mittelrohr 16 aufgewickelt ist. Dieses Mittelrohr 16 ragt mit seinem oberen Ende in einen inneren Ringsteg 17 des Deckels 13, wobei die Abdichtung zwischen Schmutz- und Reinseite ein O-Ring 18 übernimmt. Ferner ist der Deckel 13 mit einem äußeren Ringsteg 19 in einem aufgeweiteten Ende des Gehäuseteils 12 geführt und zentriert, wobei ein zweiter O-Ring 21 für die Abdichtung des Gehäuseinneren nach außen sorgt. Der Deckel 13 hat auf seiner Außenseite eine zentrisch angeordnete, domförmige Erhebung 22, an der neben einem erkennbaren Ablauf-Anschluß 23 ein dazu koaxial liegender, nicht erkennbarer Zulaufanschluß 24 ausgebildet sind, die beide als Schlauchanschlußstutzen ausgeführt sind, die koaxial zueinander liegen. Ferner ist im Deckel 13 eine Einrichtung 25 zur Kraftstoffrückführung angeordnet, wie sie an sich aus der EP-0 166 160 A1 bekannt ist und die im vorliegenden Zusammenhang nicht näher interessiert.

Das Wickelelement 15 ist hier in vorteilhafter Weise als eine im wesenltichen geschlossene Einheit ausgebildet, die austauschbar in dem Gehäuse 11 angeordnet ist. Zu diesem Zweck ist das Wickelelement 15 an seiner unteren Stirnseite 26 durch eine becherförmige Abdeckkappe 27 aus Kunststoff verschlossen. Dabei ist die äußerste Papierwindung des Wickelelements 15 in einen Rand 28 der Abdeckkappe 27 eingeschmolzen, so daß eine dichte und feste Verbindung entsteht. Die Abdeckkappe 27 bildet einen von Stegen 29 durchsetzten Wasserspeicherraum 31, der über eine Ablaßschraube 32 nach außen entleerbar ist.

Wie die Figur 2 näher zeigt, aus der der Wasserspeicherraum 31 mit der Ablaßschraube 32 nach Figur 1 in vergrößertem Maßstab erkennbar ist, sitzt die Ablaßschraube 32 in einem Gewindestutzen 33, der zentrisch und am unteren Ende der Abdeckkappe 27 ausgebildet ist. Mit diesem Gewindestutzen 33 ragt die Abdeckkappe 27 in eine topfförmige Ausformung 34 an einem Boden 35 des metallischen Gehäuseteils 12. Die Abdeckkappe 27 weist dabei am Übergang zum Gewindestutzen 33 einen tellerförmigen Absatz 36 auf, mit dem die Abdeckkappe 27 am Boden 35 des Gehäuseteils 12 aufsitzt.

Die topfförmige Ausformung 34 des metallischen Gehäuseteils 12 bildet an ihrem untersten Ende eine kreisringförmige, ebene und quer zur Längsachse des Flüssigkeitsfilters 10 verlaufende Dichtfläche 37, welche eine Öffnung 38 in der Ausformung 34 begrenzt. In der Ablaßschraube 32 ist in eine dem Gehäuse 11 zugewandte Ringnut 39 ein Flachdichtring 41 eingelegt, der bei eingebauter Ablaßschraube 32 an der Dichtfläche 37 anliegt. Zur Verbesserung der Abdichtwirkung ist dabei in dieser Ringnut 39 ein konzentrisch verlaufender Ringwulst 42 ausgebildet, der der Dichtfläche 37 gegenüber liegt. Ferner weist der Gewindestutzen 33 an seinem unteren Ende einen konzentrisch und ringförmig verlaufenden Formwulst 43 auf, dessen Durchmesser kleiner ist als der Durchmesser der Öffnung 38, so daß er bei geschlossener Ablaßschraube 32 durch die Öffnung 38 hindurchragt und noch in begrenztem Umfang in den Flachdichtring 41 hineindringt. Zum Ablassen von Wasser und Verunreinigungen ist ferner am Gewindebolzen der Ablaßschraube 32 eine Längsnut 44 ausgebildet.

Die Wirkungsweise des Flüssigkeitsfilters 10 ist an sich bekannt. Der zu reinigende Kraftstoff gelangt über den Zulauf-Anschluß 24 auf eine Schmutzseite 45 im Inneren des Gehäuses 11, durchströmt axial das Wickelement 15 und gelangt gereinigt in den Wasserspeicherraum 31. Anschließend durchströmt der gereinigte Kraftstoff das hohle Mittelrohr 16 nach oben und kann somit von der Reinseite 46 über den Ablauf-Anschluß 23 abströmen. Dabei können sich Verunreinigungen, insbesondere Wasser, im Wasserspeicherraum 31 absetzen und durch Öffnen der Ablaßschraube 32 nach außen entleert werden.

Mit vorliegender Abdichtung wird eine Doppelfunktion des Flachdichtringes 41 erreicht, der sowohl für eine innere wie auch für eine äußere Abdichtung sorgt. Wie insbesondere aus Figur 2 deutlich erkennbar ist, sorgt der Formwulst 43 vor allem für die innere Abdichtung, indem er verhindert, daß von der Schmutzseite 45 vorbei am tellerförmigen Absatz 36 über die Gewindeverbindung Kraftstoff auf die Reinseite 46, also zu dem Wasserspeicherraum 31 gelangen kann. Zusätzlich verhindert der Flachdichtring 41, daß Flüssigkeit an der Dichtfläche 37 vorbei nach außen gelangen kann, bzw. vorbei am Boden der Ringnut 39 abfließen kann. Bei eingeschraubter Abflußschraube 32 übernimmt somit der Flachdichtring 41 beide Dichtfunktionen, so daß vor allem bei austauschbaren Filtereinsätzen eine einfachere Montage sowie eine Kosteneinsparung erzielbar ist. Darüberhinaus entfallen Schmutzprobleme beim Auswechseln des Filtereinsatzes. Die Anordnung des einzigen Dichtelements in der Ablaßschraube 32 ermöglicht zudem einen einfachen Austausch dieses Bauelements.

Die Figur 3 zeigt einen Längsschnitt durch einen Teil eines zweiten Flüssigkeitsfilters 50, der sich vom ersten Flüssigkeitsfilter 10 nach Figur 1 vor allem dadurch unterscheidet, daß dessen Deckel 51 unlösbar mit dem Gehäuseteil 12 verbunden ist, in dem im übrigen das gleiche Wickelelement 15 angeordnet ist. Die vorteilhafte Abdichtung im Bereich der Ablaßschraube 32 kann somit auch bei einem Wechselfilter 50 ohne weiteres angeordnet werden.

Selbstverständlich sind Änderungen an den gezeigten Ausführungsformen möglich, ohne vom Gedanken der Erfindung abzuweichen. So kann diese Abdichtung mit Doppelfunktion des Flachdichtringes ohne weiteres auf Filtereinsätze angewandt werden, die anstelle eines Wickelelements einen Sterneinsatz aufweisen. Auch andere Bauarten von Filtereinsätzen sind verwendbar, sofern sie eine geeignete Abdeckkappe aufweisen. Vorliegende Abdichtung hat auch den Vorteil, daß sie den in axialer Richtung spannungsfreien Einbau eines Filterelements nicht beeinträchtigt. Die vorteilhafte Abdichtung ist nicht auf die gezeigte Durchströmungsrichung beim Flüssigkeitsfilter 10 begrenzt, sondern ist auch bei umgekehrter Durchströmungsrichtung anwendbar.

## Patentansprüche

1. Flüssigkeitsfilter (10, 50), insbesondere für Kraftstoffe, mit in einem Gehäuse (11) angeordneten Filterelement (15), das zwischen einen Zulauf-Anschluß (24) und einen Ablauf-Anschluß (23) geschaltet ist und dessen Gehäuse (11) aus einem die Anschlüsse (23, 24) aufweisenden Deckel (13) und einem das Filterelement (15) aufnehmenden, becherförmigen Gehäuseteil (12) besteht und mit einer bodenseitigen, an der unteren Stirnseite (26) des Filterelements (15) angeordneten Abdeckkappe (27), welche Schmutz- und Reinseite voneinander trennt und in ihrem Inneren einen im Gehäuse (11) angeordneten Speicherraum (31) bildet und mit einer Ablaßschraube (32) am Boden (35) des Gehäuses (11) zum Entleeren des Speicherraums (31) und mit am Boden (35) des Gehäuses (11) angeordneten Dichtmitteln zum Trennen von Schmutzseite und Reinseite voneinander, bei welchem Flüssigkeitsfilter (10, 50) die Ablaßschraube (32) in der Abdeckkappe (27) befestigt ist und zur inneren und äußeren Abdichtung von Boden (35) des Gehäuses (11) und Abdeckkappe (27) zwischen Schmutzseite (45), Reinseite (46) und nach Außen ein einziges Dichtelement (41) angeordnet ist.

2. Flüssigkeitsfilter nach Anspruch 1, dadurch gekennzeichnet, daß das Dichtelement ein Flachdichtring (41) ist.

3. Flüssigkeitsfilter nach Anspruch 1 oder 2, dadurch gekennzeichnet, daß das Dichtelement (41) in eine Ringnut (39) der Ablaßschraube (32) eingesetzt ist.

4. Flüssigkeitsfilter nach einem oder mehreren der Ansprüche 1 bis 3, dadurch gekennzeichnet, daß an der Abdeckkappe (27) ein die innere Abdichtung übernehmender Formwulst (43) angeordnet ist, der bei eingesetzter Ablaßschraube (32) mit dem Dichtelement (41) in Wirkverbindung steht.

5. Flüssigkeitsfilter nach Anspruch 4, dadurch gekennzeichnet, daß der Formwulst (43) eine Öffnung (38) im becherförmigen Gehäuseteil (12) durchdringt, die von einer ringförmigen Dichtfläche (37) des Gehäuseteils (12) umgeben ist.

6. Flüssigkeitsfilter nach Anspruch 5, dadurch gekennzeichnet, daß an der Ablaßschraube (32) ein Ringwulst (42) angeordnet ist, der der ebenen Dichtfläche (37) am Gehäuseteil (12) gegenüber liegt und der insbesondere einen größeren Durchmesser hat als derjenige des Formwulstes (43).

7. Flüssigkeitsfilter nach einem oder mehreren der Ansprüche 1 bis 6, dadurch gekennzeichnet, daß das Filterelement als Wickelfilter (15) ausgebildet ist, an dessen äußeren Umfang und stirnseitig die Abdeckkappe (27) dicht befestigt ist.

8. Flüssigkeitsfilter nach einem oder mehreren der Ansprüche 1 bis 7, dadurch gekennzeichnet, daß die becherförmige Abdeckkappe (27) über einen tellerförmigen Absatz (36) in einen die Ablaßschraube (32) aufnehmenden Gewindestutzen (33) übergeht, der in eine topfförmige Ausformung (34) des becherförmigen Gehäuseteils (12) ragt, an welcher Ausformung (34) die Dichtfläche (37) und die Öffnung (38) ausgebildet sind, und daß der tellerförmige Absatz (36) sich am Boden (35) des Gehäuseteils (12) abstützt.

9. Flüssigkeitsfilter nach einem der Ansprüche 1 bis 8, dadurch gekennzeichnet, daß der Durchmesser des Formwulstes (43) kleiner ist als die Öffnung (38) im Gehäuseteil (12) und insbesondere größer ist als der Gewindedurchmesser der Ablaßschraube (32).

## Claims

1. Fluid filter (10, 50), in particular for fuels, having a filter element (15) which is arranged in a casing (11), is connected between a supply connection (24) and a drain connection (23) and whose casing (11) consists of a lid (13) with the connections (23, 24) and a beaker-shaped casing part (12) accommodating the filter element (15), and having a bottom-end cover cap (27) arranged at the lower end (26) of the filter element (15), which cover cap (27) separates the dirty side and the clean side from one another and forms within it a reservoir space (31) arranged in the casing (11), and having a drain screw (32) on the bottom (35) of the casing (11) for emptying the reservoir space (31), and having sealing means arranged on the bottom (35) of the casing (11) for separating the dirty side and the clean side from one another, in which fluid filter (10, 50) the drain screw (32) is fastened in the cover cap (27) and a single sealing element (41) is arranged between the dirty side (45), the clean side (46) and towards the outside for the internal and external sealing of the bottom (35) of the casing (11) and the cover cap (27).

2. Fluid filter according to Claim 1, characterized in that the sealing element is a flat sealing ring (41).

3. Fluid filter according to Claim 1 or 2, characterized in that the sealing element (41) is inserted in an annular groove (39) of the drain screw (32).

4. Fluid filter according to one or more of Claims 1 to 3, characterized in that a shaped bead (43), which undertakes the internal sealing and is in effective connection with the sealing element (41) when the drain screw (32) is inserted, is arranged on the cover cap (27).

5. Fluid filter according to Claim 4, characterized in that the shaped bead (43) penetrates an opening (38) in the beaker-shaped housing part (12), which opening (38) is surrounded by an annular sealing surface (37) of the casing part (12).

6. Fluid filter according to Claim 5, characterized in that an annular bead (42) is arranged on the drain screw (32), which annular bead (42) is opposite to the plane sealing surface (37) on the casing part (12) and has, in particular, a larger diameter than that of the shaped bead (43).

7. Fluid filter according to one or more of Claims 1 to 6, characterized in that the filter element is configured as a wound filter (15), the cover cap (27) being tightly fastened on the outer periphery and on the end of the wound filter (15).

8. Fluid filter according to one or more of Claims 1 to 7, characterized in that the beaker-shaped cover cap (27) becomes a threaded mouthpiece (33), which accommodates the drain screw (32), via a plate-shaped shoulder (36), which threaded mouthpiece (33) protrudes into a cup-shaped formation (34) of the beaker-shaped housing part (12), the sealing surface (37) and the opening (38) being configured on this formation (34), and in that the plate-shaped shoulder (36) is supported on the bottom (35) of the casing part (12).

9. Fluid filter according to one of Claims 1 to 8, characterized in that the diameter of the shaped bead (43) is smaller than the opening (38) in the casing part (12) and, in particular, is larger than the thread diameter of the drain screw (32).

## Revendications

1. Filtre pour liquides (10, 50) en particulier pour des carburants, avec un élément filtrant (15) placé dans un boîtier (11), qui est monté entre un raccordement d'entrée (24) et un raccordement de sortie (23) et dont le boîtier (11) est composé d'un couvercle (13) recevant les raccordements (23, 24) et d'une partie de boîtier (12) en forme de gobelet logeant l'élément filtrant (15) et avec une chape (27) du côté du fond, disposée contre la face frontale inférieur (26) de l'élément filtrant (15), chape qui sépare l'un de l'autre le côté sale et le côté propre et forme à l'intérieur un espace de réserve placé dans le boîtier (11) et avec une vis de décharge (32) sur le fond (35) du boîtier (11) pour vidanger l'espace de réserve (31) et avec des moyens d'étanchéité placés au fond (35) du boîtier (11) pour séparer l'un de l'autre le côté sale et le côté propre, filtre pour liquides (10, 50) sur lequel est fixée la vis de vidange (32) dans la chape (27) et dans lequel est disposé un seul élément d'étanchéité (41) pour assurer l'étanchéité intérieure et extérieure du fond du boîtier (11) et de la chape (27) entre le côté sale et le côté purifié (46) et vers l'extérieur.

2. Filtre pour liquides selon la revendication 1, caractérisé en ce que l'élément d'étanchéité est une bague d'étanchéité plane (41).

3. Filtre pour liquides selon les revendications 1 ou 2, caractérisé en ce que l'élément d'étanchéité (41) est inséré dans une rainure annulaire (39) de la vis de décharge (32).

4. Filtre pour liquides selon l'une ou plusieurs des revendications 1 à 3, caractérisé en ce que sur la chape (27) est disposé un bourrelet de forme (43) assurant l'étanchéité intérieure, qui coopère avec l'élément d'étanchéité (41) lorsque la vis de décharge (32) est insérée.

5. Filtre pour liquides selon la revendication 4, caractérisé en ce que le bourrelet de forme (43) traverse un orifice (38) de la partie (12) du boîtier en forme de gobelet, orifice qui est entouré par une surface d'étanchéité annulaire (37) de la partie de boîtier (12).

6. Filtre pour liquides selon la revendication 5, caractérisé en ce que contre la vis de décharge (32) est mis en place un cordon annulaire (42) qui fait face à la surface d'étanchéité (37) plane de la partie de boîtier (12) et qui en particulier a un diamètre plus grand que celui du bourrelet de forme (43).

7. Filtre pour liquides selon l'une ou plusieurs des revendications 1 à 6, caractérisé en ce que l'élément filtrant est réalisé en filtre enroulé (15), sur la paroi extérieure duquel et du côté frontal est fixée de manière étanche la chape (27).

8. Filtre pour liquides selon l'une ou plusieurs des revendications 1 à 7, caractérisé en ce que la chape (27) en forme de gobelet se transforme par un décrochement (36) en forme de disque dans un ajutage fileté (33) recevant la vis de décharge (32), qui dépasse dans une partie proéminente (34) de la partie de boîtier (12) en forme de gobelet, sur laquelle partie proéminente (34) sont réalisées la surface d'étanchéité (37) et l'orifice (32), et en ce que le décrochement (36) en forme de disque s'appuie sur le fond (35) de la partie de boîtier (12).

9. Filtre pour liquides selon l'une des revendications 1 à 8, caractérisé en ce que le diamètre du bourrelet de forme (43) est plus petit que l'orifice (38) dans la partie de boîtier (12) et en particulier est plus grand que le diamètre de filetage de la vis de décharge (32).
